# DEMANDE DE BREVET EUROPEEN

(11) **EP 4 306 894 A1**
(43) Date de publication de la demande: **17.01.2024**
(21) Numéro de dépôt: 23183132.2
(22) Date de dépôt: 03.07.2023
(51) Int. Cl.: F28F 9/06, F28F 9/14, H01M 10/625, H01M 10/6555, H01M 10/6557

(54) **BOÎTE COLLECTRICE ET SYSTÈME DE GESTION THERMIQUE COMPORTANT UNE TELLE BOÎTE COLLECTRICE**

(30) Priorité: 12.07.2022 FR 2207143
(71) Demandeur: A. Raymond et Cie, 38000 Grenoble (FR)
(72) Inventeur: CHAUPIN, Jérôme, 38830 ST PIERRE ALLEVARD (FR); POGGI, Frédéric, 38600 FONTAINE (FR)
(74) Mandataire: Ipside

(57) **Abrégé**

L'invention concerne une boîte collectrice (100) d'un fluide pour connecter à des tubes (20), comprenant une rampe collectrice (500A) et un organe de liaison (300A) ayant des adaptateurs (200A), la rampe collectrice comprenant une colonne (520A) pourvue selon un axe longitudinal d'une pluralité de connecteurs (600A) espacés les uns des autres, chaque connecteur délimite un passage d'écoulement du fluide muni d'une extrémité libre qui délimite un orifice d'écoulement du fluide (650A), les connecteurs et les adapteurs sont aptes à être reçus les uns par les autres, et la boîte collectrice (100) comprenant des bagues de joint (400A), chaque bague est disposée entre un des connecteurs et un des adaptateurs. L'organe de liaison comprend :
une première position, dans laquelle les adaptateurs sont aptes à recevoir des tubes de sorte que chaque tube passe à travers une des bagues l'organe de liaison,
une deuxième position, dans laquelle, les bagues de joint soient susceptibles d'être compressées.

## Description

### Domaine technique de l'invention

La présente invention concerne une boîte collectrice d'un fluide pour connecter à des tubes, notamment à des tubes à micro-canaux. La présente invention concerne également un système de gestion thermique comportant une telle boîte collectrice et un pack batterie ayant une telle boîte collectrice.

### Technique antérieure

Notamment, dans le domaine des véhicules à motorisation électrique et/ou hybride, l'énergie électrique est fournie par des batteries qui sont amenées à chauffer pendant le fonctionnement. Il est indispensable de refroidir les batteries afin d'éviter l'endommagement à cause des températures trop élevées. Généralement, la régulation thermique est assurée au moyen d'un fluide caloporteur qui circule dans un système de refroidissement. On connaît de l'état de la technique des systèmes de refroidissement comportant des tubes et des connecteurs qui sont utilisés à cette fin. Néanmoins, il existe des inconvénients dans ces systèmes, par exemple les tubes sont solidarisés aux connecteurs par brasage, ou l'assemblage des tubes et des connecteurs paraît laborieux, ou encore la structure est compliquée pour fournir une bonne et fiable étanchéité an sein du connecteur.

Le document brevet FR 3081545 décrit un dispositif de refroidisseur de batteries dont des divers éléments (collecteur, boites et tubes) sont solidarisés ensemble mécaniquement afin d'éviter des défauts et contraintes de brassage. L'invention concerne également un procédé d'assemblage d'un refroidisseur, mais la méthode comprend nombreuses étapes et manque d'efficacité pour l'assemblage et la fabrication de masse.

### Exposé de l'invention

La présente invention vise à remédier à ces inconvénients, en proposant une boîte collectrice qui permet d'avoir un montage simplifié avec une force d'assemblage réduite et une structure simple tout en garantissant l'étanchéité requise, ainsi que le maintien mécanique des éléments. La présente invention concerne également l'ensemble d'une boîte collectrice et un tube. La présente invention concerne en outre un système de gestion thermique comportant au moins une boîte collectrice selon la présente invention. La présente invention concerne de plus un pack batterie comportant au moins une boîte collectrice selon la présente invention.

À cet effet, la présente invention concerne une boîte collectrice d'un fluide pour connecter à des tubes,

La boîte collectrice comporte une rampe collectrice et un organe de liaison ayant des adaptateurs, la rampe collectrice comprenant une colonne pourvue selon un axe longitudinal d'une pluralité de connecteurs espacés les uns des autres, chaque connecteur délimite un passage d'écoulement du fluide muni d'une extrémité libre qui délimite un orifice d'écoulement du fluide, les connecteurs et les adapteurs sont aptes à être reçus les uns par les autres, et la boîte collectrice comprenant une pluralité de bagues de joint, chaque bague de joint est disposée entre un des connecteurs et un des adaptateurs.

Selon un aspect de l'invention, la boîte collectrice présente les caractéristiques suivantes : l'organe de liaison comprend :
- une première position, dite position d'assemblage, dans laquelle les adaptateurs sont aptes à recevoir des tubes de sorte que chaque tube passe à travers une des bagues de joint,
- une deuxième position, dite position de travail, dans laquelle, les bagues de joint soient susceptibles d'être compressées et/ou déformée entre la rampe collectrice (500A) et l'organe de liaison.

En outre, l'organe de liaison passe de la première position à la deuxième position avec un déplacement relatif en translation entre la rampe collectrice et l'organe de liaison.

Avantageusement, le connecteur présente une structure simple et fournit une bonne et fiable étanchéité.

Avantageusement, l'organe de liaison assure la fonction d'indexation des tubes, de conformation et de guidage des tubes. Ceci permet d'un assemblage entre l'organe de liaison et la rampe collectrice par un simple déplacement relatif entre ces deux éléments.

Encore avantageusement, l'organe de liaison peut être configuré de sorte d'avoir le clippage entre l'organe de liaison et la rampe collectrice.

Dans un mode de réalisation, dans la deuxième position, la rampe collectrice et l'organe de liaison coopèrent de sorte que les bagues de joints soient prises en sandwich entre les adaptateurs et les connecteurs.

Dans un mode de réalisation, au moins une bague de joint est un anneau d'étanchéité.

Avantageusement, ceci permet de garantir une étanchéité.

Dans un mode de réalisation, la boîte collectrice comporte des moyens de contrôle visuel permettant de vérifier l'état d'assemblage entre une rampe collectrice et un organe de liaison.

Avantageusement, ceci permet d'assurer un bon assemblage. Dans un mode de réalisation, l'organe de liaison est retenu à la rampe collectrice dans la première position et/ou dans la deuxième position par des moyens de fixation mécanique.

Avantageusement, ceci permet un assemblage simple sans besoin d'outil ou procédé spécial.

Dans un mode de réalisation, l'organe de liaison est retenu à la rampe collectrice dans la première position et/ou dans la deuxième position par une connexion à encliquetage.

Avantageusement, ceci permet d'obtenir une sensation de clippage lors d'assemblage et un démontage simple.

Dans un mode de réalisation, au moins une bague de joint comprend au moins deux lèvres de retenue sur sa surface intérieure.

Avantageusement, ceci permet d'obtenir une meilleure étanchéité et/ou une meilleure préhension mécanique entre la bague de joint et le tube.

Dans un mode de réalisation, dans la position de travail, un connecteur et une bague de joint, constituant une interface mâle, sont reçus dans un adaptateur qui constitue une interface femelle.

Dans un mode de réalisation, le connecteur et la bague de joint sont surmoulés. Avantageusement, ceci permet de garder la forme de la bague de joint avant d'introduire le tube, et donc éviter son endommagement par le tube.

Dans un mode de réalisation, le connecteur femelle, l'interface mâle caractérisé en ce que, dans la position de travail, un adaptateur et une bague de joint, constituant une interface mâle, sont reçus dans un connecteur qui constitue une interface femelle.

Dans un mode de réalisation, l'adaptateur et la bague de joint sont surmoulés. Avantageusement, ceci permet de garder la forme de la bague de joint avant d'introduire le tube, et donc éviter son endommagement par le tube.

Dans un mode de réalisation, l'organe de liaison comporte une pluralité de paires d'adaptateurs, chaque paire d'adaptateurs étant liés par une zone intermédiaire.

Selon un deuxième aspect de l'invention, l'ensemble d'une boîte collectrice selon la présente invention et au moins un tube reçu dans l'organe de liaison. Dans un mode de réalisation, le tube est un tube à micro-canaux comportant d'au moins une surface plane.

Dans un mode de réalisation, le tube est un tube à micro-canaux comportant d'au moins une surface ondulée.

Avantageusement, l'ensemble du connecteur et du tube sont apte à refroidir ou réchauffer des objets ayant une variété de surfaces.

Selon un troisième aspect de l'invention, le système de gestion thermique comportant au moins une boîte collectrice selon la présente invention.

Selon un quatrième aspect de l'invention, le pack batterie comportant au moins une boîte collectrice selon la présente invention.

Selon un quatrième aspect de l'invention, la présente invention concerne un procédé d'assemblage d'une boîte collectrice selon la présente invention et des tubes. Le procédé comporte les étapes suivantes :
a). on positionne l'organe de liaison ayant des adaptateurs vis-à-vis des tubes, de sorte que chaque tube soit reçu par un des adaptateurs et que chaque tube passe à travers une des bagues de joint;
b). on effectue un déplacement relatif en translation entre la rampe collectrice et l'organe de liaison, de sorte que les connecteurs et les adapteurs soient reçus les uns par les autres et que les bagues de joint soient compressées entre la rampe collectrice et l'organe de liaison.

Avantageusement, le procédé d'assemblage est simple et efficace.

Dans un mode de réalisation, les tubes sont pré-positionnés.

Dans un mode de réalisation, l'organe de liaison est retenu à la rampe collectrice par des moyens de fixation mécanique dans l'étape b).

### Brève description des figures

D'autres avantages, buts et caractéristiques de la présente invention ressortent de la description qui suit faite, dans un but explicatif et nullement limitatif, en regard des dessins annexés, dans lesquels :
la Figure 1 représente une vue en perspective d'un groupe de batteries dont les tubes de gestion thermique sont solidarisés aux connecteurs par brasage ;
la Figure 2 représente une vue en éclaté d'un groupe de batteries dont les tubes de gestion thermique sont reliés par des boîtes collectrices selon un premier mode de réalisation de la présente invention ;
la Figure 3 représente une vue de coupe d'une boîte collectrice selon un premier mode de réalisation de la présente invention ;
la Figure 4 représente une vue en perspective d'un groupe de batteries dont les tubes de gestion thermique sont reliés par des boîtes collectrices selon un deuxième mode de réalisation de la présente invention ;
la Figure 5 représente une vue en perspective d'une boîte collectrice selon un deuxième mode de réalisation de la présente invention ;
la Figure 5A représente une vue en perspective d'une boîte collectrice connectée aux tubes selon un deuxième mode de réalisation de la présente invention ;la Figure 6 représente une vue partielle d'une boîte collectrice selon un deuxième mode de réalisation de la présente invention ;
la Figure 7 représente une vue de coupe d'une boîte collectrice selon un deuxième mode de réalisation de la présente invention ;
la Figure 8 représente une vue de dessus d'une boîte collectrice selon un deuxième mode de réalisation de la présente invention ;
la Figure 9 représente une vue en éclaté d'une boîte collectrice connectée aux tubes selon un deuxième mode de réalisation de la présente invention ;
la Figure 10 représente une vue en perspective d'un groupe de batteries dont les tubes de gestion thermique sont reliés par des boîtes collectrices selon un deuxième mode de réalisation de la présente invention ;
la Figure 11 représente une vue en perspective d'un groupe de batteries dont les tubes de gestion thermique sont reliés par des boîtes collectrices selon un deuxième mode de réalisation de la présente invention ;
la Figure 12 représente une vue en perspective d'un groupe de batteries dont les tubes de gestion thermique sont reliés par des boîtes collectrices mises en place dans un module et/ou pack batterie selon un deuxième mode de réalisation de la présente invention ;
la Figure 13 représente une vue de coupe partielle d'un groupe de batteries de la figure 12.

### Description des modes de réalisation

Les différentes figures ainsi que les éléments d'une même figure ne sont pas nécessairement représentées à la même échelle. Sur l'ensemble des figures, les éléments identiques portent la même référence numérique. La terminologie employée dans la présente description ne doit en aucun cas être interprétée de manière limitative ou restrictive, simplement parce qu'elle est employée en conjonction avec une description détaillée de certains modes de réalisation de l'invention.

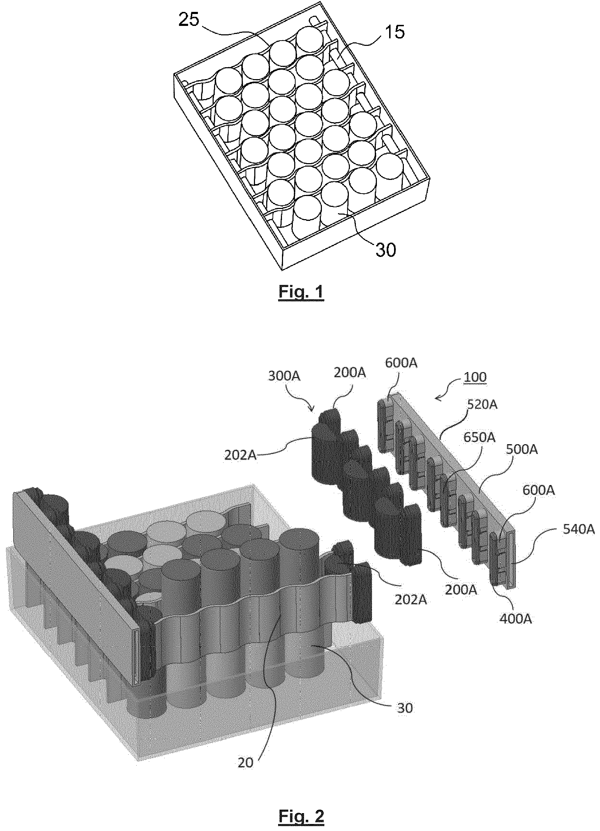

La Figure 1 montre une vue en perspective d'un groupe de cellules cylindriques 30 dont les tubes 25 de gestion thermique sont solidarisés aux connecteurs 15 connus de l'état de la technique, par exemple, dans le document brevet US2021/0159567 ou US2013/0196184). En fait, les tubes et les connecteurs sont solidarisés par brasage.

La Figure 2 montre une vue en éclaté d'un groupe de cellules cylindriques dont les tubes 20 de gestion thermique sont reliés par des boîtes collectrices 100 selon un premier mode de réalisation de la présente invention.

Cette boîte collectrice 100 est par exemple destinée à être montée sur un réseau de conduites de circulation d'un fluide d'un pack batterie. Le fluide peut être un liquide caloporteur. Tel que représenté, ce réseau présente une rangée d'extrémités de tubulures s'étendant longitudinalement à laquelle la boîte collectrice 100 peut venir se monter.

La boîte collectrice 100 selon la présente invention comporte une rampe collectrice 500A et un organe de liaison 300A. La rampe collectrice 500A comprend une colonne 520A pourvue selon un axe longitudinal d'une pluralité de connecteurs 600A espacés les uns des autres. L'organe de liaison 300A comporte des adaptateurs 200A. Dans cet exemple, les adaptateurs 200A sont pourvus des ouvertures aptes à recevoir des connecteurs 600A.

Conformément à l'invention, chaque connecteur 600A délimite un passage d'écoulement du fluide muni d'une extrémité libre qui délimite un orifice d'écoulement du fluide 650A.

Conformément à l'invention, la boîte collectrice 100 comprend une pluralité de bagues de joint 400A pour assurer avantageusement l'étanchéité. En fait, chaque bague de joint 400A est disposée entre un connecteur 600A et un adaptateur 200A.

Dans ce premier mode de réalisation, les adaptateurs 200A comportent chacun une autre ouverture et sont aptes à recevoir des tubes par cette ouverture de sorte que chaque tube passe à travers une des bagues de joint 400A, lorsque les connecteurs 600A sont reçus dans les adaptateurs 200A.

Dans un mode de réalisation, les bagues joints 400A sont avantageusement agencés de sorte qu'elles ne soient pas coupées par les tubes 20 lorsqu'elles reçoivent ces derniers.

La rampe collectrice 500A et l'organe de liaison 300A coopèrent de sorte que les bagues de joints soient prises en sandwich entre les adaptateurs 200A et les connecteurs 600A. On appelle ici que la rampe se trouve dans une deuxième position.

Lorsque le connecteur est dans une deuxième position, dite position de travail, les bagues de joint 400A sont susceptibles d'être compressées et/ou déformées entre la rampe collectrice 500A et l'organe de liaison 300A.

Conformément à l'invention, l'organe de liaison 300A passe de la première position à la deuxième position avec un déplacement relatif en translation entre la rampe collectrice 500A et l'organe de liaison 300A. Par exemple, on pousse la rampe collectrice 500A vers l'organe de liaison 300A dont les adaptateurs 200A reçoivent déjà les connecteurs 600A de la rampe. Chaque tube 20 reçu par un adaptateur 200A passe à travers une des bagues de joint 400A.

Avantageusement, la rampe collectrice 500A est montée de façon amovible à l'organe de liaison 300A.

Dans ce mode de réalisation, l'organe de liaison comporte une pluralité de paires d'adaptateurs, chaque paire d'adaptateurs étant liés par une zone intermédiaire 202A. Avantageusement, cette zone intermédiaire 202A permet d'entrer en contact avec un cellule cylindrique et d'absorber par exemple sa vibration et de réduire l'impact sur la connexion entre le tube 20 et l'adaptateur 200A. Cette zone intermédiaire pourra prendre la forme d'un demi cylindre si cellule cylindrique ou la forme rectangulaire si cellule prismatique.

Dans un mode de réalisation, la zone intermédiaire 202A comporte des moyens permettant d'être fixée à un support et / ou servir de support à un clips et/ou organe de sécurisation.

Avantageusement, la surface de contact entre l'organe de liaison 300A et la rampe collectrice permet de vérifier l'état d'assemblage de la boîte collectrice 500A.

Plus généralement, la rampe collectrice 500A comporte un passage d'écoulement du fluide 540A communicant avec tous les connecteurs 600A. Ainsi les tubes 20 et la boîte collectrice 100 forment un réseau de circulation de fluide faisant partie d'un système de gestion thermique.

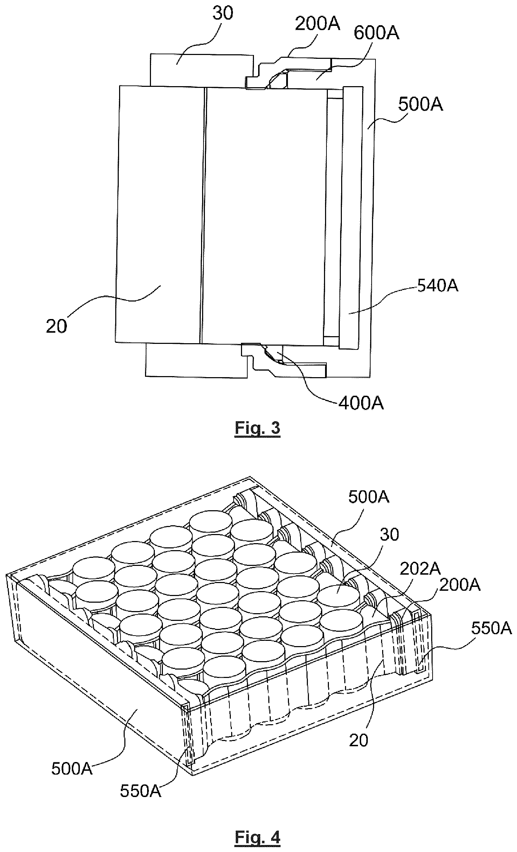

La Figure 3 représente une vue de coupe partielle d'une boîte collectrice 100 selon un premier mode de réalisation de la présente invention.

On observe qu'un connecteur 600A est reçu dans un adapteur 200A avec une bague de joint 400A prise en sandwich entre l'adaptateur 200A et le connecteur 600A.

Avantageusement, la bague de joint 400A est un anneau d'étanchéité. Elle permet d'assurer l'étanchéité de la connexion.

Dans un mode de réalisation préféré, un connecteur 600A est solidarisé à une bague de joint 400A. Il est particulièrement avantageux, car ceci permet de poser la bague de joint 400A dans l'adaptateur 200A tout en gardant sa forme.

Dans un mode de réalisation particulièrement préféré, le connecteur 600A et la bague de joint 400A sont surmoulés.

Le connecteur 600A étant communicant avec le passage d'écoulement du fluide 540A, le fluide qui circule dans le tube 20 entre ainsi dans le passage d'écoulement de la rampe collectrice 500A.

Dans l'exemple décrit, le connecteur 600A reçu dans l'adaptateur 200A se trouve dans la deuxième position.

Dans un mode de réalisation non illustré, la bague de joint 400A est munie de deux lèvres de retenue sur sa surface interne. Ceci permet d'obtenir une meilleure étanchéité et/ou une meilleure préhension mécanique vis-à-vis du tube 20.

Dans un mode de réalisation, dans la deuxième position, la bague de joint compressée et/ou déformée entre le connecteur 600A et l'adaptateur 200A interfère avec une paroi interne de l'adaptateur 200A constituant un logement qui reçoit la bague de joint. Avantageusement, ceci permet de renforcer l'étanchéité obtenue.

Dans un mode de réalisation préféré (non illustré), la bague de joint 400A n'entre pas en contact avec le tube 20 dans cette première position. Avantageusement, ceci permet d'éviter l'endommagement de la bague de joint 400A par le tube 20 lors de son introduction.

La Figure 4 montre une vue en perspective d'un groupe de cellules cylindriques comportant un système de gestion thermique de la figure 2.

Dans l'exemple décrit, le groupe de cellules cylindriques est clôturé dans une case et chaque connecteur 600A reçu dans un adaptateur 200A se trouve dans la position de travail.

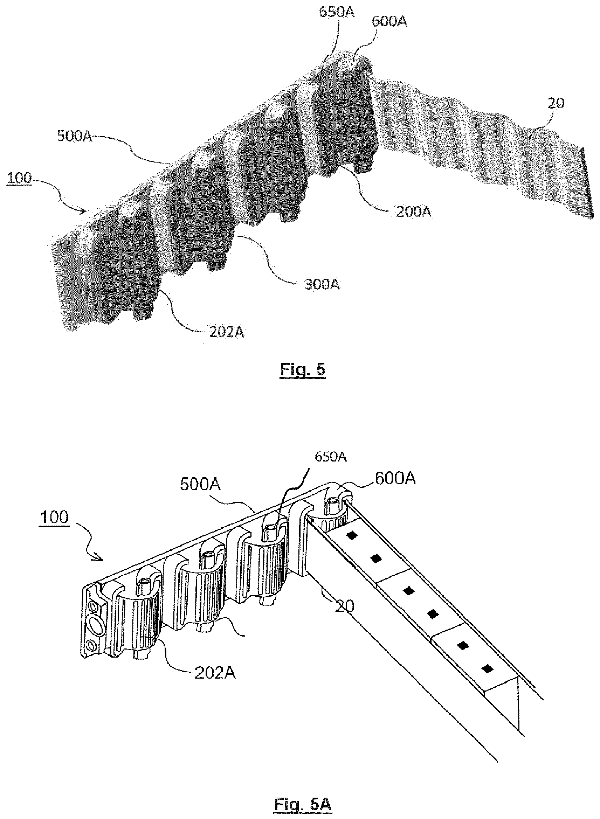

La Figure 5 montre une vue en perspective d'une boîte collectrice 100 selon un deuxième mode de réalisation de la présente invention.

Selon ce deuxième mode de réalisation, cette boîte collectrice 100 est par exemple destinée à être montée sur un réseau de conduites de circulation d'un fluide d'un pack batterie.

Conformément à ce deuxième mode de réalisation, la boîte collectrice 100 selon la présente invention comporte une rampe collectrice 500A et une organe de liaison 300A. La rampe collectrice 500A comprend une colonne 520A pourvue selon un axe longitudinal d'une pluralité de connecteurs 600A espacés les uns des autres. L'organe de liaison 300A comporte des adaptateurs 200A. Dans cet exemple, les connecteurs 600A sont aptes à recevoir les adaptateurs 200A.

Conformément à l'invention, chaque connecteur 600A délimite un passage d'écoulement du fluide muni d'une extrémité libre qui délimite un orifice 650A. Avantageusement, un adaptateur 200A est reçu dans le connecteur 600A par son orifice 650A.

Conformément à l'invention, la boîte collectrice 100 comprend une pluralité de bagues de joint 400A pour assurer avantageusement l'étanchéité. En fait, chaque bague de joint 400A est disposée entre un connecteur 600A et un adaptateur 200A.

Dans ce premier mode de réalisation, les adaptateurs 200A comportent chacun un trou de passage et sont aptes à recevoir des tubes par ce trou de passage de sorte que chaque tube passe à travers une des bagues de joint 400A, lorsque les adaptateurs 200A sont reçus dans les connecteurs 600A.

La rampe collectrice 500A et l'organe de liaison 300A coopèrent de sorte que les bagues de joints soient prises en sandwich entre les adaptateurs 200A et les connecteurs 600A. On appelle ici que la rampe se trouve dans une deuxième position.

Lorsque le connecteur est dans une deuxième position, dite position de travail, les bagues de joint 400A sont susceptibles d'être compressées et/ou déformées entre la rampe collectrice 500A et l'organe de liaison 300A.

Conformément à l'invention, l'organe de liaison 300A passe de la première position à la deuxième position avec un déplacement relatif en translation entre la rampe collectrice 500A et l'organe de liaison 300A. Par exemple, on pousse la rampe collectrice 500A vers l'organe de liaison 300A dont les adaptateurs 200A sont déjà reçus dans les connecteurs 600A de la rampe. Chaque tube 20 reçu par un adaptateur 200A passe à travers une des bagues de joint 400A.

Avantageusement, la rampe collectrice 500A est montée de façon amovible à l'organe de liaison 300A.

Dans ce mode de réalisation, l'organe de liaison comporte une pluralité de paires d'adaptateurs. Ce sera détaillé plus loin.

Plus généralement, la rampe collectrice 500A comporte un passage d'écoulement du fluide 540A communicant avec tous les connecteurs 600A. Ainsi les tubes 20 et la collectrice 100 forment un réseau de circulation de fluide faisant partie d'un système de gestion thermique.

Selon un mode de réalisation préféré, les tubes 20 sont premièrement montés dans les adaptateurs 200A du collecteur 300A. Ensuite, le connecteur 300A est assemblé avec la rampe collectrice 500A.

La Figure 5A représente une vue en perspective d'une boîte collectrice connectée aux tubes selon un deuxième mode de réalisation. Dans cet exemple, les tubes sont des tubes à micro-canaux comportant d'au moins une surface plane qui s'adapte aux cellules prismatiques.

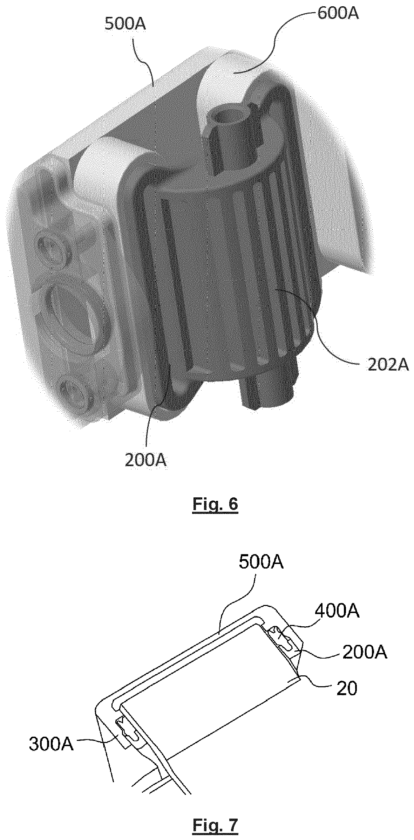

La Figure 6 montre une vue partielle d'une boîte collectrice selon un deuxième mode de réalisation de la présente invention.

Chaque paire d'adaptateurs est liés par une zone intermédiaire 202A. Avantageusement, cette zone intermédiaire 202A permet d'entrer en contact avec un cellule cylindrique et d'absorber par exemple sa vibration et de réduire l'impact sur la connexion entre le tube 20 et l'adaptateur 200A.

La Figure 7 montre une vue de coupe d'une boîte collectrice 100 selon un deuxième mode de réalisation de la présente invention ;

On observe qu'un adapteur 200A sont reçus dans un connecteur 600A avec une bague de joint 400A prise en sandwich entre l'adaptateur 200A et le connecteur 600A.

Avantageusement, la bague de joint 400A est un anneau d'étanchéité. Elle permet d'assurer l'étanchéité de la connexion.

Dans un mode de réalisation préféré, un adaptateur 200A est solidarisé à une bague de joint 400A. Il est particulièrement avantageux, car ceci permet de poser la bague de joint 400A dans le connecteur 200A tout en gardant sa forme.

Dans un mode de réalisation particulièrement préféré, l'adaptateur 200A et la bague de joint 400A sont surmoulés.

Dans un mode de réalisation non illustré, la bague de joint 400A est munie de deux lèvres de retenue sur sa surface interne. Ceci permet d'obtenir une meilleure étanchéité et/ou une meilleure préhension mécanique vis-à-vis du tube 20.

Dans un mode de réalisation, dans la deuxième position, la bague de joint compressée et/ou déformée entre le connecteur 600A et l'adaptateur 200A interfère avec une paroi interne du connecteur 600A constituant un logement qui reçoit la bague de joint. Avantageusement, ceci permet de renforcer l'étanchéité obtenue.

Dans un mode de réalisation préféré (non illustré), la bague de joint 400A n'entre pas en contact avec le tube 20 dans cette première position. Avantageusement, ceci permet d'éviter l'endommagement de la bague de joint 400A par le tube 20 lors de son introduction.

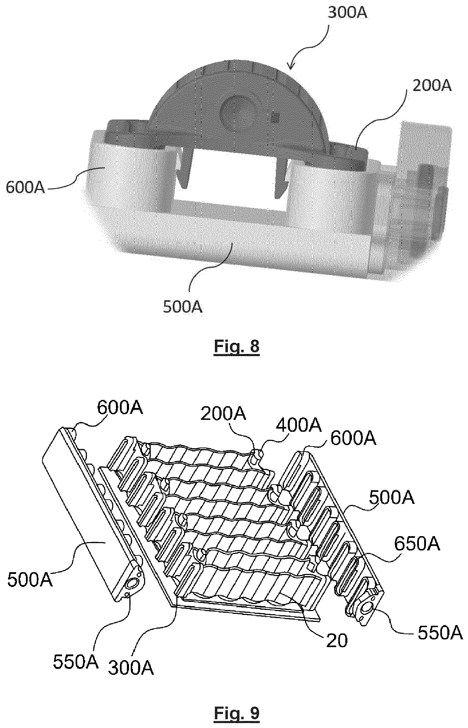

La Figure 8 montre une vue de dessus partielle d'une boîte collectrice 100 selon un deuxième mode de réalisation.

Conformément à l'invention, l'organe de liaison 300A est retenu à la rampe collectrice 500A dans la première position et/ou dans la deuxième position par des moyens de fixation mécanique.

Dans ce deuxième mode de réalisation, les moyens de fixation mécanique sont une connexion à encliquetage. Comme illustré sur la Figure 8, l'organe de liaison 300A et la rampe collectrice 500A s'emboîtent par emboîtage élastique. À cet effet, l'organe de liaison 300A comporte deux pattes qui coopèrent avec les contre dépouilles de la rampe collectrice 500A.

Avantageusement, le fait que l'organe de liaison 300A entre dans sa deuxième position donne à l'opérateur une sensation de clippage.

Avantageusement, la boite collectrice 100 comporte des moyens de contrôle visuel permettant de vérifier l'état d'assemblage entre le connecteur 200A et la colonne collectrice 500A, par exemple une fenêtre de contrôle (non illustré). À titre d'exemple, on peut observer différentes couleurs à travers de la fenêtre de contrôle.

Un autre exemple des moyens de contrôle visuel est la surface de contact entre l'organe de liaison 300A et la rampe collectrice, qui permet de vérifier l'état d'assemblage de la boîte collectrice 500A.

La Figure 9 montre une vue en éclaté de deux boîtes collectrices 100 dont les connecteurs sont montés sur les tubes 20 d'un système de gestion thermique.

Les tubes 20 sont arrangés selon un intervalle correspondant à la distance entre deux adaptateurs adjacents 200A. Chaque adaptateur 200A surmoulé avec une bague de joint 400A est monté sur les deux extrémités de chaque tube 20.

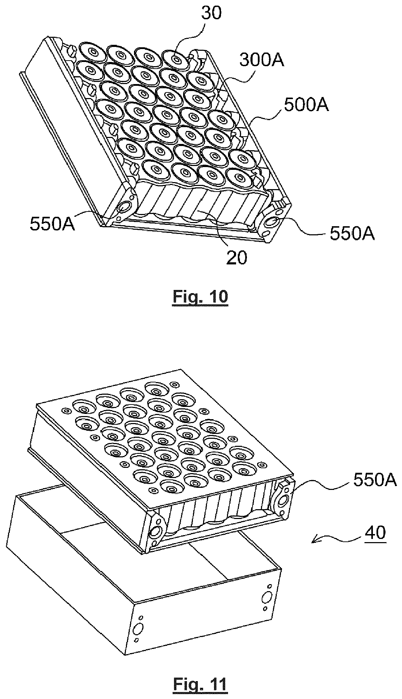

On ensuite installe les deux rampes collectrices 500A sur les deux extrémités des tubes 20, en poussant les rampes collectrices 500A vers les collecteurs 300A dont les adaptateurs sont alignés avec les connecteurs 600A, comme illustré sur la Figure 10.

Dans un mode de réalisation avantageux, chaque rampe collectrice 500A comporte un orifice 550A servant de sortie/entrée de fluide dans le réseau de circulation.

Dans l'exemple illustré, les tubes sont des tubes à micro-canaux comportant d'au moins une surface ondulée. Les cellules cylindriques sont ensuite montées dans l'espace séparant les tubes 20.

Dans un mode de réalisation illustré sur la Figure 5A, les tubes sont des tubes à micro-canaux comportant d'au moins une surface plane pour mieux adapter par exemple aux surfaces planes à refroidir et/ou réchauffer, par celles des cellules prismatiques.

On pose ensuite l'ensemble du groupe de batteries illustré sur la Figure 10 dans une boîte pourvue de deux orifices, comme sur la Figure 11.

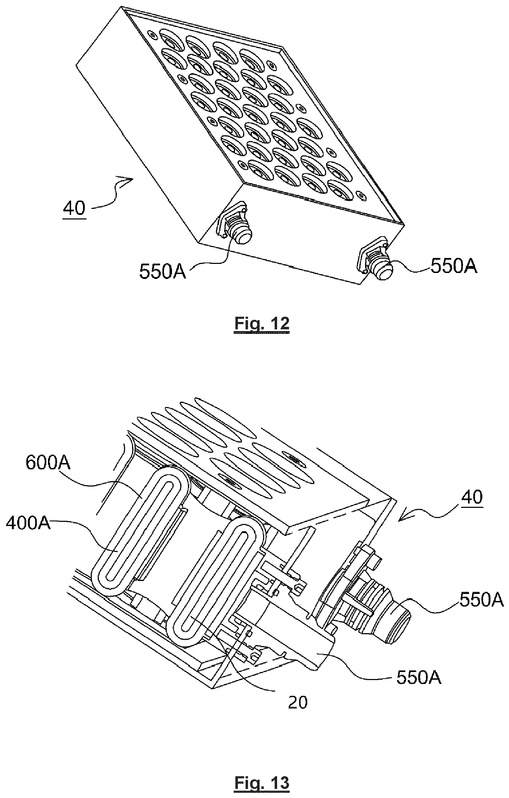

Les deux orifices 550A font office d'entrée / sortie de fluide dans le système de gestion thermique, comme illustre la Figure 12. L'ensemble illustré constitue un pack batterie 40 comportant des boîtes collectrices 100 selon la présente invention.

On observe sur la Figure 13 une vue de coupe partielle selon un axe de l'orifice 550A d'un groupe de batteries de la figure 12.

Plus généralement pour la présente invention, la bague de joint 400A est avantageusement réalisée en matériau élastomère dans un mode de réalisation préféré. En état compressé, la bague de joint 400A entre en contact avec la surface du tube 20, ceci permettant d'assurer l'étanchéité entre le tube et la bague de joint. Encore avantageusement, la bague de joint 400A compressée par l'adaptateur 200 A et/ou le connecteur 600A assure une préhension mécanique avec le tube qui est retenu dans la boîte collectrice malgré la pression du fluide. Avantageusement, la bague de joint 400A est de matériau adapté qui permet de résiste à la différence de pression du fluide.

En état compressé, les bagues de joints prises en sandwich entre les adaptateurs 200A et les connecteurs 600A assurent l'étanchéité entre les tubes 20, les adaptateurs 200A et les connecteurs 600A.

Pour assembler une boîte collectrice 100 selon la présente invention et des tubes 20, les étapes ci-dessous pourront être suivies :
a). on positionne l'organe de liaison (300A) ayant des adaptateurs (200A) vis-à-vis des tubes (20), de sorte que chaque tube (20) soit reçu par un des adaptateurs (200A) et que chaque tube (20) passe à travers une des bagues de joint (400A);
b). on effectue un déplacement relatif en translation entre la rampe collectrice (500A) et l'organe de liaison (300A), de sorte que les connecteurs et les adapteurs soient reçus les uns par les autres et que les bagues de joint (400A) soient compressées entre la rampe collectrice (500A) et l'organe de liaison (300A).

Dans un mode de réalisation, les tubes 20 sont pré-positionnés, par exemple sur un support dans le système de gestion thermique.

Dans un mode de réalisation, l'organe de liaison 300A est retenu à la rampe collectrice 500A par des moyens de fixation mécanique dans l'étape b).

### LISTE DES SIGNES DE RÉFÉRENCE

**[Tableaux 1]**

| Références | Désignations |
|---|---|
| 20 | Tube |

| | |
|---|---|
| 30 | Batterie |
| 100 | Boîte collectrice |
| 200A | Adaptateur |
| 202A | Zone intermédiaire |
| 300A | Organe de liaison |
| 400A | Bague de joint |
| 500A | Rampe collectrice |
| 520A | Colonne |
| 540A | Passage d'écoulement du fluide |
| 550A | Orifice |
| 600A | Connecteur |
| 650A | Orifice d'écoulement du fluide |

## Revendications

1. Boîte collectrice (100) d'un fluide pour connecter à des tubes (20), comprenant une rampe collectrice (500A) et un organe de liaison (300A) ayant des adaptateurs (200A), la rampe collectrice (500A) comprenant une colonne (520A) pourvue selon un axe longitudinal d'une pluralité de connecteurs (600A) espacés les uns des autres, chaque connecteur (600A) délimite un passage d'écoulement du fluide muni d'une extrémité libre qui délimite un orifice d'écoulement du fluide (650A), les connecteurs et les adapteurs sont aptes à être reçus les uns par les autres, et la boîte collectrice (100) comprenant une pluralité de bagues de joint (400A), chaque bague de joint (400A) est disposée entre un des connecteurs (600A) et un des adaptateurs (200A),
**caractérisée en ce que**,
l'organe de liaison (300A) comprend :
une première position, dite position d'assemblage, dans laquelle les adaptateurs (200A) sont aptes à recevoir des tubes de sorte que chaque tube passe à travers une des bagues de joint (400A)l'organe de liaison,
une deuxième position, dite position de travail, dans laquelle, les bagues de joint (400A) soient susceptibles d'être compressées entre la rampe collectrice (500A) et l'organe de liaison (300A),
et **en ce que** l'organe de liaison (300A) passe de la première position à la deuxième position avec un déplacement relatif en translation entre la rampe collectrice (500A) et l'organe de liaison (300A).

2. Boîte collectrice (100) selon la revendication 1, dans laquelle, dans la deuxième position la rampe collectrice (500A) et l'organe de liaison (300A) coopèrent de sorte que les bagues de joints soient prises en sandwich entre les adaptateurs (200A) et les connecteurs (600A)

3. Boîte collectrice (100) selon l'une des revendications précédentes, dans laquelle, au moins une bague de joint (400A) est un anneau d'étanchéité.

4. Boîte collectrice (100) selon l'une des revendications précédentes, **caractérisée en ce qu'**elle comporte des moyens de contrôle visuel permettant de vérifier l'état d'assemblage entre une rampe collectrice (500A) et un organe de liaison (300A).

5. Boîte collectrice (100) selon l'une des revendications précédentes, l'organe de liaison (300A) est retenu à la rampe collectrice (500A) dans la première position et/ou dans la deuxième position par des moyens de fixation mécanique.

6. Boîte collectrice (100) selon l'une des revendications précédentes, l'organe de liaison (300A) est retenu à la rampe collectrice (500A) dans la première position et/ou dans la deuxième position par une connexion à encliquetage.

7. Boîte collectrice (100) selon l'une des revendications précédentes, au moins une bague de joint (400A) comprend au moins deux lèvres de retenue sur sa surface intérieure.

8. Boîte collectrice (100) selon l'une des revendications précédentes, **caractérisé en ce que**, dans la position de travail, un connecteur (600A) et une bague de joint (400A), constituant une interface mâle, sont reçus dans un adaptateur (200A) qui constitue une interface femelle.

9. Boîte collectrice (100) selon la revendication 8, dans laquelle, le connecteur (600A) et la bague de joint (400A) sont surmoulés.

10. Boîte collectrice (100) selon l'une des revendications précédentes, dans laquelle, dans la position de travail, un adaptateur (200A) et une bague de joint (400A), constituant une interface mâle, sont reçus dans un connecteur (600A) qui constitue une interface femelle.

11. Boîte collectrice (100) selon la revendication 10, dans laquelle, l'adaptateur (200A) et la bague de joint (400A) sont surmoulés.

12. Boîte collectrice (100) selon l'une des revendications précédentes, dans laquelle, l'organe de liaison comporte une pluralité de paires d'adaptateurs, chaque paire d'adaptateurs étant liés par une zone intermédiaire (202A).

13. Ensemble d'une boîte collectrice (100) selon l'une des revendications précédentes et au moins un tube reçu dans l'adaptateur(200A) de l'organe de liaison.

14. Système de gestion thermique comportant au moins une boîte collectrice (100) selon l'une des revendications 1 à 11.

15. Pack batterie comportant au moins une boîte collectrice (100) selon l'une des revendications 1 à 11.

16. Procédé d'assemblage d'une boîte collectrice selon l'une des revendications 1 à 12 et des tubes (20), comportant les étapes suivantes :
a). on positionne l'organe de liaison (300A) ayant des adaptateurs (200A) vis-à-vis des tubes (20), de sorte que chaque tube (20) soit reçu par un des adaptateurs (200A) et que chaque tube (20) passe à travers une des bagues de joint (400A);
b). on effectue un déplacement relatif en translation entre la rampe collectrice (500A) et l'organe de liaison (300A), de sorte que les connecteurs et les adapteurs soient reçus les uns par les autres et que les bagues de joint (400A) soient compressées entre la rampe collectrice (500A) et l'organe de liaison (300A).

17. Procédé d'assemblage selon la revendication 16, dans lequel, les tubes (20) sont pré-positionnés.

18. Procédé d'assemblage selon la revendication 16 ou 17, l'organe de liaison (300A) est retenu à la rampe collectrice (500A) par des moyens de fixation mécanique dans l'étape b).
